# EUROPÄISCHE PATENTSCHRIFT

(11) **EP 4 449 606 B1**
(45) Veröffentlichungstag und Bekanntmachung des Hinweises auf die Patenterteilung: **09.12.2026**
(21) Anmeldenummer: 22808788.8
(22) Anmeldetag: 24.10.2022
(51) Int. Cl.: H02P 29/02, H02P 27/06

(54) **VERFAHREN UND VORRICHTUNG ZUM BETRIEB EINES WECHSELRICHTERS**
METHOD AND DEVICE FOR OPERATING AN INVERTER
PROCÉDÉ ET DISPOSITIF DE COMMANDE D'UN ONDULEUR

(30) Priorität: 13.12.2021 DE 102021214224
(43) Veröffentlichungstag der Anmeldung: 23.10.2024
(73) Patentinhaber: Robert Bosch GmbH, 70442 Stuttgart (DE)
(72) Erfinder: KUEHNER, Jochen, 71522 Backnang (DE)
(86) Internationale Anmeldenummer: PCT/EP2022/079566
(87) Internationale Veröffentlichungsnummer: WO 2023/110200

(56) Entgegenhaltungen:
- DE-A1- 102012 101 508
- DE-A1- 102016 223 539
- DE-T5- 112015 000 834
- DE-T5- 112015 000 835
- DE-T5- 112015 004 320
- DE-T5- 112015 004 786

## Beschreibung

Die Erfindung betrifft ein Verfahren und eine Vorrichtung zum Betrieb eines Wechselrichters. Ferner betrifft die Erfindung einen Antriebsstrang mit einer entsprechenden Vorrichtung und ein Fahrzeug mit einem Antriebsstrang sowie ein Computerprogramm und ein computerlesbares Speichermedium.

### Stand der Technik

Elektrische Antriebe von Hybrid- oder Elektrofahrzeugen umfassen eine elektrische Maschine, wie zum Beispiel eine permanenterregte Synchronmaschine oder eine Asynchronmaschine. Die elektrische Maschine eines solchen Antriebssystems kann mittels eines Pulswechselrichters mit einer Wechselspannung versorgt werden. Dabei kann es bei einem Fehlerzustand (Defekt der Recheneinheit, Defekt des CAN-Bus, Defekt der Hardware) in dem Antriebssystem notwendig sein, in dem Wechselrichter einen sicheren Zustand einzustellen. Ein solcher sicherer Zustand kann beispielsweise einen aktiven Kurzschluss umfassen, in welchem die einzelnen Phasen der elektrischen Maschine über den Wechselrichter kurzgeschlossen sind. Einen weiteren sicheren Zustand stellt beispielsweise der Freilauf dar. Hierbei sind alle Schaltelemente des Wechselrichters geöffnet. Ein Stromfluss ist dabei nur über die Freilaufdioden möglich, welche parallel zu den Schaltelementen des Wechselrichters vorgesehen sind.

Die Druckschriften DE 10 2016 223539 A1, DE 10 2012 101508 A1, DE 11 2015 004320 T5, DE 11 2015 000834 T5 und DE 11 2015 004786 T5 offenbaren Vorrichtungen zum Betrieb eines Wechselrichters. Die Druckschrift DE 10 2011 081 173 A1 offenbart eine Betriebszustandsschaltung für einen Wechselrichter und ein Verfahren zum Einstellen von Betriebszuständen eines Wechselrichters. Insbesondere ist hierbei vorgesehen, in Abhängigkeit von einer ermittelten Drehzahl einer elektrischen Maschine entweder in einen Freilaufzustand oder einen aktiven Kurzschluss zu schalten.

Bei dem Wechsel aus dem regulären Betrieb zum aktiven Kurzschluss ergeben sich sehr hohe Ströme, die die normalen Lastströme durch die Schaltelemente des Wechselrichters weit übersteigen. Entsprechend werden die verwendeten Schaltelemente bzgl. der Stromtragfähigkeit für diesen Übergang größer dimensioniert, als dies eigentlich für den regulären Betrieb notwendig wäre. Im Freilauf hingegen steigt die in der elektrischen Maschine induzierte Spannung mit steigender Drehzahl der elektrischen Maschine. Entsprechend werden die verwendeten Schaltelemente bzgl. der Spannungsfestigkeit für diesen Betriebszustand größer dimensioniert, als dies eigentlich für den regulären Betrieb notwendig wäre. Die höheren Ströme und Spannungen führen ebenfalls zu einer größeren Belastung eines eingangsseitig an einem Wechselrichter angeordneten Zwischenkreiskondensator. Auch dieser wird entsprechend der speziellen Belastung für diese Übergänge zwischen dem regulären Betrieb und der sicheren Zustände größer dimensioniert, als es für den regulären Betrieb notwendig wäre. Mit der größeren Dimensionierung wird mehr Platz und Material für die Schaltelemente und den Zwischenkreiskondensator benötigt. Dies läuft dem Ziel, kleine, kompakte Leistungselektronik zu entwickeln entgegen. Daher besteht der Bedarf an Lösungen, mit denen eine größere Dimensionierung minimiert werden kann.

### Offenbarung der Erfindung

Die Erfindung ist im unabhängigen Verfahrensanspruch 1 und im unabhängigen Vorrichtungsanspruch 6 definiert. Bevorzugte Ausführungsformen sind in den abhängigen Ansprüchen definiert.

Es wird ein Verfahren zum Betrieb eines Wechselrichters bereitgestellt. Der Wechselrichter ist eingangsseitig mit einem Zwischenkreiskondensator verbunden und ausgangsseitig mit einer elektrisch erregten dreiphasigen Maschine verbunden. Die elektrische Maschine wird in einem ersten Betriebsmodus, insbesondere generatorisch, oder in einem zweiten Betriebsmodus, insbesondere motorisch, betrieben. Das Verfahren umfasst die Schritte: Ansteuern des Wechselrichters zum Überführen des Wechselrichters, des Zwischenkreiskondensators und der elektrischen Maschine in einen sicheren Zustand, insbesondere in einen Freilaufbetrieb. Das Verfahren ist dadurch gekennzeichnet, dass das Ansteuern des Wechselrichters zum Überführen in einen sicheren Zustand mittels einer ersten Schrittfolge durchgeführt wird, wobei die erste Schrittfolge die Schritte umfasst: Ermitteln eines Abschaltvektors; Ansteuern des Wechselrichters entsprechend dem Abschaltvektor; Ermitteln der drei Phasenströme der elektrischen Maschine; Ansteuern des Wechselrichters in den Freilaufbetrieb, wenn die ermittelten drei Phasenströme einen vorgebbaren Stromschwellwert unterschreiten.

Die elektrisch erregte Maschine wird regulär oder in einem Normalbetrieb in einem ersten oder zweiten Betriebsmodus betrieben. Bevorzugt sind diese Betriebsmodi ein generatorischer oder ein motorischer Betrieb der elektrischen Maschine. Bevorzugt wird der Wechselrichter dabei mittels Raumzeigerpulsweitenmodulation oder Blockbetrieb angesteuert. Es wird ein Verfahren zum Überführen des Wechselrichters, des Zwischenkreiskondensators und der elektrischen Maschine in einen sicheren Zustand bereitgestellt, bei dem eine erste Schrittfolge ausgeführt wird. Nach dem Ermitteln eines Abschaltvektors wird der Wechselrichter mit dem Abschaltvektor solange angesteuert, bis die ermittelten Phasenströme, bevorzugt deren Betrag, jeweils einen vorgebbaren Stromschwellwert unterschreiten. Anschließend wird der Wechselrichter dauerhaft in den Freilauf geschaltet. Bevorzugt werden hierzu alle Schaltelemente des Wechselrichters geöffnet. Ein Abschaltvektor ist einer von mehreren möglichen Spannungs-/ oder Stromvektoren, bei denen lediglich ein Schaltelement an einer Halbbrücke oder je ein Schaltelement an zwei Halbbrücken geschlossen sind und alle verbleibenden Schaltelemente der drei Halbbrücken des Wechselrichters geöffnet sind. Bevorzugt sind zur Ermittlung des Abschaltvektors unterschiedliche Verfahren möglich. Vorteilhaft wird ein Verfahren bereitgestellt, mit dem ein Übergang in einen sicheren Zustand ermöglicht wird, bei dem keine wesentlichen Strom- oder Spannungsüberhöhungen im Vergleich zum regulären Betrieb einer elektrisch erregten Maschine resultieren.

Erfindungsgemäß umfasst die Ermittlung des Abschaltvektors die Schritte: Ansteuern des Wechselrichters in den Freilaufbetrieb; Ermitteln eines Spannungsvektors im Freilaufbetrieb; Ermitteln des Abschaltvektors in Abhängigkeit des Spannungsvektors. Somit wird zunächst der Wechselrichter in den Freilaufbetrieb angesteuert. Hierzu werden alle Schaltelemente der Halbbrücken des Wechselrichters geöffnet. Der Spannungsvektor wird bevorzugt aus einer Ermittlung der Phasenspannungen während des Freilaufbetriebs ermittelt. Bevorzugt wird die Gleichspannung eingangsseitig am Wechselrichter ermittelt. Bevorzugt werden ausgangsseitig die Phasenspannungen der drei Phasen ermittelt oder gemessen und in digitaler Form gespeichert. Bevorzugt wird je Phase der Wert 1 für eine Phasenspannung gespeichert, wenn die Phasenspannung größer als die halbe ermittelte Gleichspannung ist und der Wert 0 für eine Phasenspannung gespeichert, wenn die Phasenspannung kleiner als die halbe ermittelte Gleichspannung ist. Bevorzugt ergibt sich der Spannungsvektor aus den je Phase ermittelten Werten. Alternativ wird der Spannungsvektor direkt von der Regelung des Wechselrichters empfangen, der aufgrund der Regelung bereits vorliegt. Ein Abschaltvektor ist einer von mehreren möglichen Spannungs-/ oder Stromvektoren, bei denen lediglich ein Schaltelement an einer Halbbrücke oder je ein Schaltelement an zwei Halbbrücken geschlossen sind und alle verbleibenden Schaltelemente der drei Halbbrücken des Wechselrichters geöffnet sind.Bevorzugt sind zur Ermittlung des Abschaltvektors unterschiedliche Verfahren möglich. Der Abschaltvektor wird bevorzugt aus dem Spannungsvektor im Freilaufbetrieb ermittelt. Bevorzugt wird der Abschaltvektor in Abhängigkeit des Spannungsvektors aus einem Kennfeld ermittelt. In dem Kennfeld sind wirksame Abschaltvektoren möglichen Spannungsvektoren zugeordnet. Bevorzugt werden die wirksamen Abschaltvektoren mittels einer Simulation oder aus Messungen ermittelt und in dem Kennfeld abgelegt. Bevorzugt wird eine elektrische Periode, bevorzugt zwischen 0 und 360°, der Phasenströme in 6 Zeitabschnitte, bevorzugt gleich lange Zeitabschnitte, unterteilt. Bevorzugt wird jedem Zeitabschnitt ein Abschaltvektor zugeordnet. Bevorzugt wird mittels des ermittelten Spannungsvektors festgestellt, in welchem Zeitabschnitt sich die Ansteuerung des Wechselrichters momentan befindet. Bevorzugt wird in Abhängigkeit des Zeitabschnitts der entsprechende Abschaltvektor dem Kennfeld entnommen. Vorteilhaft werden Möglichkeiten zur Ermittlung des Abschaltvektors bereitgestellt.

In einer anderen Ausgestaltung der Erfindung umfasst das Ermitteln des Abschaltvektors die Schritte: Regelmäßiges Aktualisieren des Abschaltvektors in einem Speicher in Abhängigkeit des Betriebs des Wechselrichters; Auslesen des Abschaltvektors aus dem Speicher.

Bevorzugt werden Abschaltvektoren mittels einer Simulation oder aus Messungen ermittelt und in einem Kennfeld abgelegt. Bevorzugt wird eine elektrische Periode, bevorzugt zwischen 0 und 360°, der Phasenströme in 6 Zeitabschnitte, bevorzugt gleich lange Zeitabschnitte, unterteilt. Bevorzugt wird jedem Zeitabschnitt ein Abschaltvektor zugeordnet. Bevorzugt ist aufgrund des Betriebs des Wechselrichters einer Regelung bekannt, in welchem Zeitabschnitt sich die Ansteuerung des Wechselrichters momentan befindet. Bevorzugt wird in Abhängigkeit des Zeitabschnitts der entsprechende Abschaltvektor dem Kennfeld entnommen. Bevorzugt erfolgt das regelmäßige Aktualisieren des Abschaltvektors in einem Speicher, indem stets der aktuelle Abschaltvektor in den Speicher geschrieben wird und der bisherige Abschaltvektor überschrieben wird. Bevorzugt ist der Speicher ein Hardwarespeicher und den Halbbrücken zugeordnet, bevorzugt der Endstufe der Schaltelemente der Halbbrücken zugeordnet, und unabhängig von der Regelung des Wechselrichters. Mittels dem Auslesen des Abschaltvektors aus dem Speicher erfolgt folglich das Ermitteln des aktuellen Abschaltvektors. Bevorzugt wird somit der Abschaltvektor bei laufender Regelung oder Betrieb des Wechselrichters ständig aktualisiert und in den Speicher geschrieben. Bevorzugt wird im Fehlerfall dieser Abschaltvektor aus dem Speicher ausgelesen und direkt an den Halbbrücken eingestellt, bevorzugt an der Endstufe der Schaltelemente der Halbbrücken.

Bevorzugt erfolgt die Speicherung, damit das Verfahren zum Betrieb eines Wechselrichters auch bei einem Ausfall einer Vorrichtung oder einer Rechnereinrichtung, die bevorzugt den Betrieb des Wechselrichters regelt, sicher durchgeführt wird. Vorteilhaft wird ein alternatives Verfahren zur Ermittlung des Abschaltvektors bereitgestellt.

Erfindungsgemäß umfasst der Wechselrichter eine erste, zweite und dritte dem Zwischenkreiskondensator parallel geschaltete Halbbrücke, wobei jede Halbbrücke zwei in Reihe geschaltete Schaltelemente umfasst und jeweils ein Mittenabgriff zwischen den zwei in Reihe geschalteten Schaltelementen mit je einem Phasenanschluss der elektrischen Maschine verbunden ist, wobei der ermittelte Abschaltvektor ein Schließen eines ersten Schaltelementes der ersten Halbbrücke und ein Öffnen eines zweiten Schaltelementes der ersten Halbbrücke und ein Öffnen der zwei Schaltelemente der zweiten und der dritten Halbbrücke beschreibt oder der ermittelte Abschaltvektor ein Schließen eines ersten Schaltelementes der ersten Halbbrücke und ein Öffnen eines zweiten Schaltelementes der ersten Halbbrücke und ein Schließen eines ersten Schaltelementes der zweiten Halbbrücke und ein Öffnen eines zweiten Schaltelementes der zweiten Halbbrücke und das Öffnen der zwei Schaltelemente der dritten Halbbrücke beschreibt.

Bevorzugt ist ein Abschaltvektor einer von mehreren möglichen Spannungs-/ oder Stromvektoren, bei denen lediglich ein Schaltelement an einer Halbbrücke oder je ein Schaltelement an zwei Halbbrücken geschlossen sind und alle verbleibenden Schaltelemente der drei Halbbrücken des Wechselrichters geöffnet sind. Hierzu wird ein Abschaltvektor ermittelt, der lediglich das Schließen eines Schaltelementes einer Halbbrücke beschreibt oder vorgibt, wobei alle weiteren Schaltelemente der Halbbrücken geöffnet bleiben. Alternativ wird ein Abschaltvektor ermittelt, der lediglich das Schließen eines Schaltelementes einer ersten Halbbrücke und das Schließen eines Schaltelementes einer zweiten Halbbrücke beschreibt oder vorgibt, wobei alle weiteren Schaltelemente der Halbbrücken geöffnet bleiben. Vorteilhaft werden mögliche Abschaltvektoren bereitgestellt, mittels denen ein Übergang von dem regulären Betrieb in einen sicheren Zustand ermöglicht wird, bei dem keine wesentlichen Strom- oder Spannungsüberhöhungen im Vergleich zum regulären Betrieb einer elektrisch erregten Maschine resultieren.

In einer anderen Ausgestaltung der Erfindung umfasst das Ansteuern des Wechselrichters zum Überführen mittels einer ersten Schrittfolge den Schritt: Minimieren oder Abschalten des Erregerstroms der elektrischen Maschine.

Wenn bei einer elektrisch erregten elektrischen Maschine der Erregerstrom oder die Erregerspannung minimiert oder abgeschaltet ist, wird selbst bei schnell drehendem Rotor der elektrischen Maschine keine oder lediglich eine minimale Spannung induziert. Vorteilhaft wird ein Verfahren bereitgestellt, welches es ermöglicht, einen Freilaufzustand auch bei hohen Drehzahlen der elektrischen Maschine als sicheren Zustand einer elektrisch erregten Maschine zu verwenden.

In einer anderen Ausgestaltung der Erfindung beginnt das Verfahren mit den Schritten: Ermitteln des Betriebsmodus der elektrischen Maschine, Ansteuern des Wechselrichters zum Überführen in Abhängigkeit des ermittelten Betriebsmodus mittels der ersten Schrittfolge bei Vorliegen des ersten Betriebsmodus und mittels einer zweiten Schrittfolge bei Vorliegen des zweiten Betriebsmodus. Der Betriebsmodus liegt einer Regelung des Wechselrichters als Information vor. Bevorzugt empfängt das Verfahren diese Information von der Regelung des Wechselrichters. Bevorzugt wird die Information, welcher Betriebsmodus vorliegt, mittels einer Stromsensorik im Gleichspannungsteil des Wechselrichters erfasst. Beispielhaft kann in Abhängigkeit des Vorzeichens des ermittelten Stroms erkannt werden, ob ein generatorischer oder ein motorischer Betriebsmodus vorliegt. Je nach vorliegendem Betriebsmodus wird das Ansteuern des Wechselrichters zum Überführen mittels der ersten oder einer zweiten Schrittfolge ausgeführt. Vorteilhaft wird ein Verfahren bereitgestellt, mittels unterschiedlicher Verfahren den Wechselrichter, den Zwischenkreiskondensatorund die elektrische erregte Maschine in einen sicheren Zustand zu bringen.

In einer anderen Ausgestaltung der Erfindung umfasst die zweite Schrittfolge die Schritte: Ansteuern des Wechselrichters in den Freilaufbetrieb; Ermitteln eines Spannungsvektors im Freilaufbetrieb; Ermitteln eines Gegenvektors in Abhängigkeit des Spannungsvektors; Ermitteln einer eingangsseitigen Gleichspannung des Wechselrichters; Ansteuern des Wechselrichters entsprechend dem Gegenvektor, wenn die ermittelte Gleichspannung eine vorgebbare Spannungsschwelle überschreitet; Ansteuern des Wechselrichters in den Freilaufbetrieb, solange die ermittelte Gleichspannung die vorgebbare Spannungsschwelle unterschreitet.

Es wird ein weiteres Verfahren zum Überführen des Wechselrichters, des Zwischenkreiskondensators und der elektrischen Maschine in einen sicheren Zustand bereitgestellt, bei dem eine zweite Schrittfolge ausgeführt wird. Hierzu wird zunächst der Wechselrichter in den Freilaufbetrieb angesteuert. Hierzu werden alle Schaltelemente der Halbbrücken des Wechselrichters geöffnet. Der Spannungsvektor wird bevorzugt aus einer Ermittlung der Phasenspannungen während des Freilaufbetriebs ermittelt. Bevorzugt wird die Gleichspannung eingangsseitig am Wechselrichter ermittelt. Bevorzugt werden ausgangsseitig die Phasenspannungen der drei Phasen ermittelt oder gemessen und in digitaler Form gespeichert. Bevorzugt wird je Phase der Wert 1 für eine Phasenspannung gespeichert, wenn die Phasenspannung größer als die halbe ermittelte Gleichspannung ist und der Wert 0 für eine Phasenspannung gespeichert, wenn die Phasenspannung kleiner als die halbe ermittelte Gleichspannung ist. Bevorzugt ergibt sich der Spannungsvektor aus den je Phase ermittelten Werten. Alternativ wird der Spannungsvektor direkt von der Regelung des Wechselrichters empfangen, der aufgrund der Regelung bereits vorliegt. Ein Gegenvektor ist einer der acht möglichen Spannungsvektoren, die bei der Raumzeigerpulsweitenmodulation zur Ansteuerung der Schaltelemente des Wechselrichters verwendet werden. Bevorzugt sind zur Ermittlung des Gegenvektors unterschiedliche Verfahren möglich. Der Gegenvektor wird bevorzugt aus dem Spannungsvektor im Freilaufbetrieb ermittelt. Bevorzugt wird der Gegenvektor aus dem Spannungsvektor zu dem Zeitpunkt im Freilaufbetrieb ermittelt, zu dem die ermittelte Gleichspannung einen vorgebbaren Spannungsschwellwert überschreitet. Bevorzugt sind die Werte des ermittelten Gegenvektors invertiert zu dem Spannungsvektor, wobei eine 1 bedeutet, dass ein oberes Schaltelement geschlossen wird und eine 0 bedeutet, dass das obere Schaltelement geöffnet wird. Die unteren Schaltelemente werden jeweils komplementär angesteuert. D.h. bei einem geschlossenen oberen Schaltelement ist das untere geöffnet und umgekehrt. Alternativ wird der Gegenvektor bevorzugt in Abhängigkeit des Spannungsvektors aus einem Kennfeld ermittelt. In dem Kennfeld sind wirksame Gegenvektoren möglichen Stromvektoren oder Spannungsvektoren zugeordnet. Bevorzugt sind die wirksamen Gegenvektoren empirisch ermittelt. Die eingangsseitige Gleichspannung des Wechselrichters wird bevorzugt im Gleichspannungszwischenkreis, bevorzugt an dem Zwischenkreiskondensator, bevorzugt mit einer Spannungsmesseinrichtung, ermittelt. Der Wechselrichter wird mit dem Gegenvektor angesteuert, wenn die ermittelte Gleichspannung einen vorgebbaren Spannungsschwellwert überschreitet. Unterschreitet die ermittelte Gleichspannung den Spannungsschwellwert, so wird der Wechselrichter in den Freilaufbetrieb angesteuert. Vorteilhaft werden Möglichkeiten zur Ermittlung eines Gegenvektors bereitgestellt, und ein Verfahren, mit dem ein Übergang in einen sicheren Zustand ermöglicht wird, bei dem keine wesentlichen Strom- oder Spannungsüberhöhungen im Vergleich zum regulären Betrieb einer elektrisch erregten Maschine resultieren.

Ferner betrifft die Erfindung eine Vorrichtung zum Betrieb eines Wechselrichters, wobei der Wechselrichter dazu eingerichtet ist, eingangsseitig mit einem Zwischenkreiskondensator verbunden und ausgangsseitig mit einer elektrisch erregten dreiphasigen Maschine verbunden zu werden. Die elektrische Maschine ist dazu eingerichtet, in einem ersten Betriebsmodus, insbesondere generatorisch, oder in einem zweiten Betriebsmodus, insbesondere motorisch, betrieben zu werden. Die Vorrichtung ist dazu eingerichtet, den Wechselrichter anzusteuern zum Überführen des Wechselrichters, des Zwischenkreiskondensators und der elektrischen Maschine in einen sicheren Zustand, insbesondere in einen Freilaufbetrieb. Die Vorrichtung kennzeichnet sich dadurch, dass die Vorrichtung dazu eingerichtet ist, das Ansteuern des Wechselrichters zum Überführen mittels einer ersten Schrittfolge durchzuführen, wobei die erste Schrittfolge umfasst: Einen Abschaltvektor zu ermitteln, den Wechselrichter entsprechend dem Abschaltvektor anzusteuern, drei Phasenströme der elektrischen Maschine zu ermitteln und den Wechselrichter in den Freilaufbetrieb anzusteuern, wenn die ermittelten drei Phasenströme einen vorgebbaren Stromschwellwert unterschreiten.

Die elektrisch erregte Maschine wird regulär oder in einem Normalbetrieb in einem ersten oder zweiten Betriebsmodus betrieben. Bevorzugt sind diese Betriebsmodi ein generatorischer oder ein motorischer Betrieb der elektrischen Maschine. Bevorzugt wird der Wechselrichter dabei mittels Raumzeigerpulsweitenmodulation oder Blockbetrieb angesteuert. Es wird eine Vorrichtung bereitgestellt, die dazu eingerichtet ist, einen Wechselrichter, einen angeschlossenen Zwischenkreiskondensator und eine elektrische Maschine in einen sicheren Zustand zu überführen. Hierzu wird eine erste Schrittfolge ausgeführt wird. Nach dem Ermitteln eines Abschaltvektors steuert die Vorrichtung den Wechselrichter mit dem Abschaltvektor solange an, bis die ermittelten Phasenströme, bevorzugt deren Betrag, jeweils einen vorgebbaren Stromschwellwert unterschreiten. Anschließend steuert oder schaltet die Vorrichtung den Wechselrichter dauerhaft in den Freilauf. Bevorzugt werden hierzu alle Schaltelemente des Wechselrichters geöffnet. Bevorzugt ist ein Abschaltvektor einer von mehreren möglichen Spannungs-/ oder Stromvektoren, bei denen lediglich ein Schaltelement an einer Halbbrücke oder je ein Schaltelement an zwei Halbbrücken geschlossen sind und alle verbleibenden Schaltelemente der drei Halbbrücken des Wechselrichters geöffnet sind. Bevorzugt sind zur Ermittlung des Abschaltvektors unterschiedliche Verfahren möglich. Vorteilhaft wird eine Vorrichtung bereitgestellt, mit der ein Übergang in einen sicheren Zustand ermöglicht wird, bei dem keine wesentlichen Strom- oder Spannungsüberhöhungen im Vergleich zum regulären Betrieb einer elektrisch erregten Maschine resultieren.

Ferner betrifft die Erfindung einen Antriebsstrang mit einer beschriebenen Vorrichtung und bevorzugt mit einem Wechselrichter, einem Zwischenkreiskondensator und/ oder einer elektrisch erregten Maschine. Ein derartiger Antriebsstrang dient beispielsweise dem Antrieb eines elektrischen Fahrzeugs. Mittels des Verfahrens und der Vorrichtung wird ein Übergang in einen sicheren Zustand des Antriebsstrangs ermöglicht.

Ferner betrifft die Erfindung ein Fahrzeug, mit einem beschriebenen Antriebsstrang. Vorteilhaft wird somit ein Fahrzeug bereitgestellt, welches eine Vorrichtung umfasst, mit dem die Leistungselektronik des Fahrzeugs in einen sicheren Zustand überführt werden kann.

Ferner betrifft die Erfindung ein Computerprogramm, umfassend Befehle, die bewirken, dass die beschriebene Vorrichtung das beschriebene Verfahren ausführt.

Ferner betrifft die Erfindung ein computerlesbares Speichermedium, umfassend Befehle, die bei der Ausführung durch eine beschriebe Vorrichtung, diese veranlassen, die beschriebenen Verfahrensschritte auszuführen. Bevorzugt ist das computerlesbare Speichermedium innerhalb eines ASIC oder einem programmierbaren Logikbaustein (CPLD, FPGA...) implementiert.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer Vorrichtung zum Betrieb eines Wechselrichters,
Figur 2
   ein erstes schematisches Gleichspannungs-, Phasenstromdiagramm
Figur 3
   ein zweites schematisches Gleichspannungs-, Phasenstromdiagramm
Figur 4
   ein schematisch dargestelltes Fahrzeug mit einem Antriebsstrang,
Figur 5
   ein schematisch dargestelltes erstes Ablaufdiagramm für ein Verfahren zum Betrieb eines Wechselrichters
Figur 6
   ein schematisch dargestelltes zweites Ablaufdiagramm für ein Verfahren zum Betrieb eines Wechselrichters.

### Ausführungsformen der Erfindung

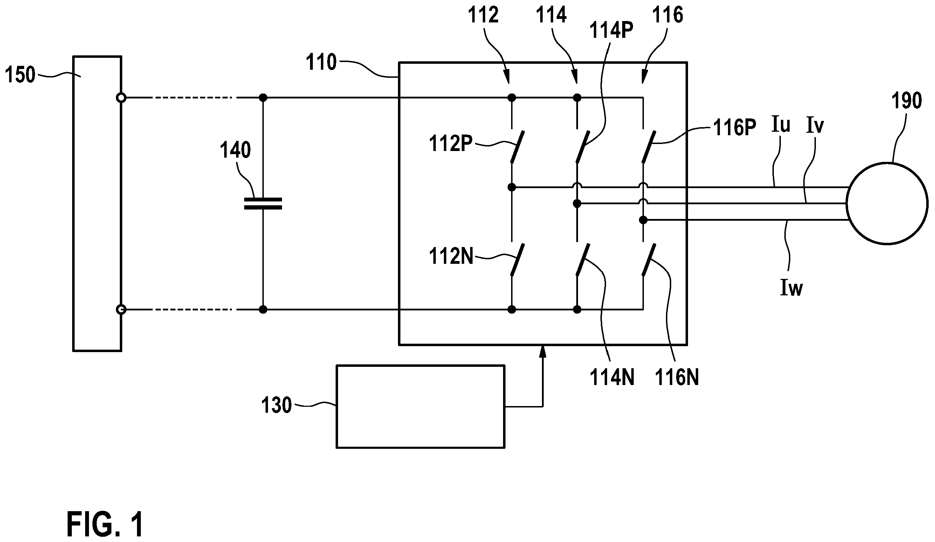

Die Figur 1 zeigt einen Wechselrichter 110, der eingangsseitig mit einem Zwischenkreiskondensator 140 elektrisch verbunden ist. Bevorzugt ist der Zwischenkreiskondensator ein Folienkondensator oder ein Elektrolytkondensator. Ausgangsseitig ist der Wechselrichter 110 über drei Phasen mit einer elektrisch erregten dreiphasigen Maschine 190 elektrisch verbunden. Eine Batterie 150 ist über Anschlussleitungen (gestrichelt dargestellt) mit dem Zwischenkreiskondensator 140 elektrisch verbindbar. Eingangsseitig an dem Wechselrichter 110 und/ oder an dem Zwischenkreiskondensator 140 liegt eine Gleichspannung Udc an. Der Wechselrichter 110 umfasst drei Halbbrücken 112, 114, 116. Die Halbbrücken 112, 114, 116 umfassen jeweils eine Reihenschaltung aus zwei Schaltelementen 112P, 112N, 114P, 114N, 116P, 116N. Zwischen den beiden Schaltelementen ist jeweils ein Mittenabgriff angeordnet, der jeweils mit einer der drei Phasen der elektrischen Maschine verbunden ist. Mittels der drei Halbbrücken 112, 114, 116 kann durch Schließen eines oberen Schalters 112P, 114P, 116P der Halbbrücke das positive Potential der Gleichspannung Udc mit einer Phase der elektrischen Maschine 190 verbunden werden, oder bei Schließen eines unteren Schalters 112N, 114N, 116N, das negative Potential der Gleichspannung Udc mit einer Phase der elektrischen Maschine 190 verbunden werden. Die Schaltelemente 112P, 112N, 114P, 114N, 116P, 116N sind bevorzugt Leistungshalbleiter-Schaltelemente, wie bspw. IGBTs, MOSFETs oder SiC-Halbleiter. Ausgangsseitig fließen beim Betrieb des Wechselrichters 110 und der elektrischen Maschine 190 die Ströme lu, Iv, Iw durch die Phasen der elektrischen Maschine 190. Die Figur 1 zeigt eine Vorrichtung 130 zur Ansteuerung des Wechselrichters 110. Die Vorrichtung 130 ist eingerichtet, den Wechselrichter 110 anzusteuern zum Überführen des Wechselrichters, des Zwischenkreiskondensators 140 und der elektrischen Maschine 190 in einen sicheren Zustand, insbesondere in einen Freilaufbetrieb. Die Vorrichtung 130 ist dazu eingerichtet, das Ansteuern des Wechselrichters 110 zum Überführen mittels einer ersten Schrittfolge durchzuführen, wobei die erste Schrittfolge umfasst: Einen Abschaltvektor VA zu ermitteln, den Wechselrichter 110 entsprechend dem Abschaltvektor VA anzusteuern, drei Phasenströme lu, Iv, Iw der elektrischen Maschine zu ermitteln und den Wechselrichter in den Freilaufbetrieb (FW) anzusteuern, wenn die ermittelten drei Phasenströme lu, Iv, Iw einen vorgebbaren Stromschwellwert Is unterschreiten.

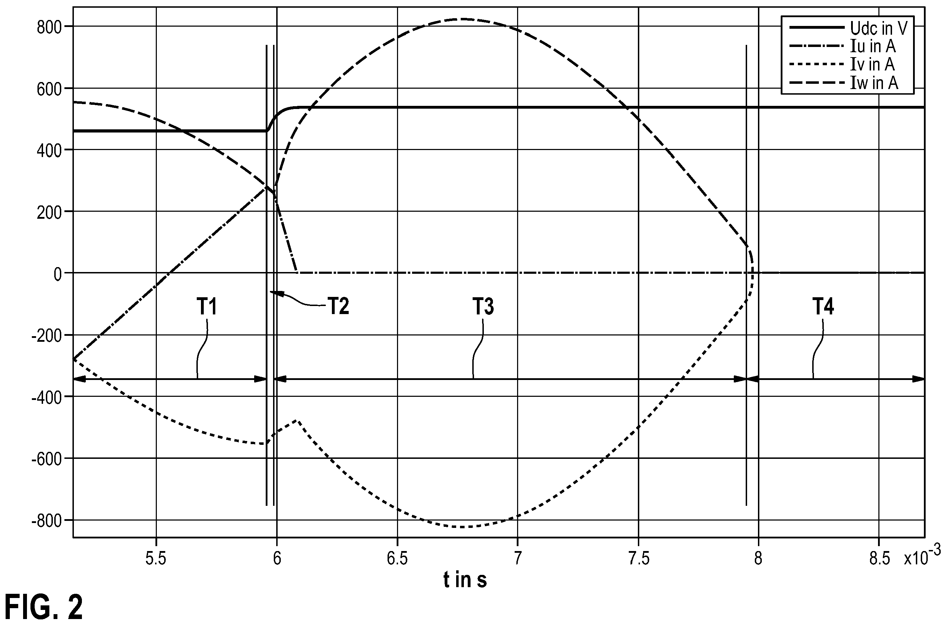

Figur 2 zeigt ein erstes schematisches Gleichspannungs-, Phasenstromdiagramm über der Zeit, welches die Verläufe der Gleichspannung Udc am Zwischenkreiskondensator 140 und der Phasenströme lu, Iv, Iw ausgangsseitig des Wechselrichters in den Phasen der elektrisch erregten Maschine zeigen, wenn der Wechselrichter 110 angesteuert wird von einer Vorrichtung 130 zum Überführen des Wechselrichters 110, des Zwischenkreiskondensators 140 und der elektrischen Maschine 190 in einen sicheren Zustand mittels einer ersten Schrittfolge. Während eines ersten dargestellten Zeitabschnitts T1 wird die elektrische Maschine in einem ersten Betriebsmodus B1 betrieben. In diesem Betriebsmodus B1 liegt eine konstante Gleichspannung Udc am Zwischenkreiskondensator 140 an. Durch die Phasen der elektrischen Maschine fließen sinusförmige, 120° versetzte, Phasenströme lu, Iv, Iw. Gemäß der beispielhaften Darstellung wird zur Ermittlung des Abschaltvektors VA der Wechselrichter 140 kurzzeitig in einem zweiten dargestellten Zeitabschnitt T2 in den Freilauf FW geschaltet. Die Gleichspannung Udc am Zwischenkreiskondensator steigt währenddessen rasch an. Nach der Bestimmung eines Abschaltvektors VA wird der Wechselrichter in einem dritten Zeitabschnitt T3 entsprechend dem Abschaltvektor VA angesteuert. Der Phasenstrom lu durch die Halbbrücke, an der ein Schalter geschlossen wurde, sinkt umgehend auf 0 A ab. Die verbleibenden Phasenströme Iv, Iw werden etwas größer, bevor sie gemeinsam absinken. Mittels einer Phasenstrommesseinheit werden Phasenströme ermittelt, Wenn die Phasenströme einen vorgebbaren Stromschwellwert Is unterschreiten, wird der Wechselrichter 110 in den Freilaufbetrieb angesteuert. In einem vierten dargestellten Zeitabschnitt T4 ist der Verlauf der minimierten Phasentröme lu, Iv, Iw bei einer konstanten Gleichspannung Udc dargestellt. Unabhängig von der Drehzahl der elektrisch erregten Maschine verändern sich die Phasentröme lu, Iv, Iw nicht mehr, da inzwischen auch der Erregerstrom oder die Erregerspannung der elektrischen Maschine reduziert ist aufgrund einer Ansteuerung mittels der Vorrichtung 130. Somit wird selbst bei drehendem Rotor der elektrischen Maschine 190 keine wesentliche Spannung in der elektrischen Maschine 190 induziert. Folglich wird der Wechselrichter 110, der Zwischenkreiskondensator 140 und die elektrische Maschine 190 mittels der ersten Schrittfolge in einen sicheren Zustand überführt.

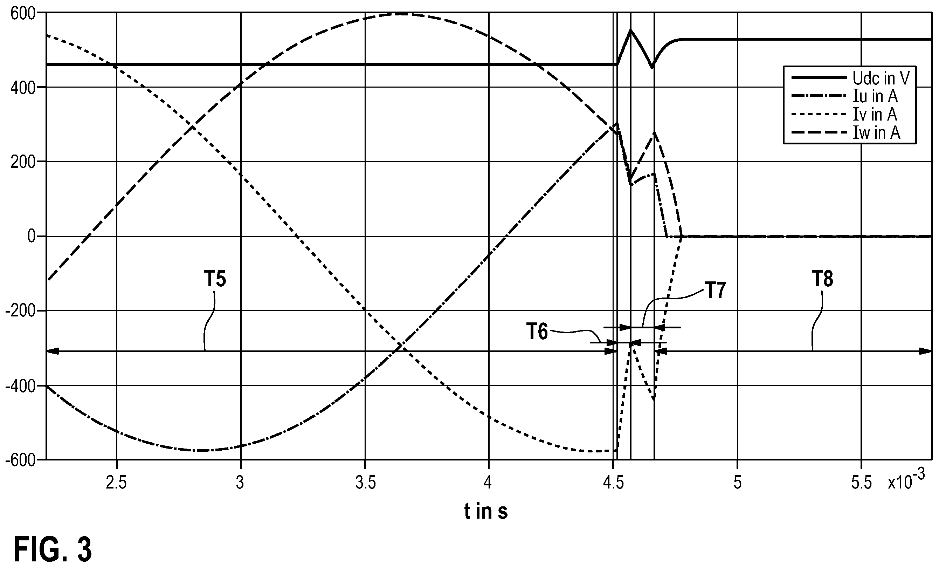

Figur 3 zeigt ein zweites schematisches Gleichspannungs-, Phasenstromdiagramm über der Zeit, welches die Verläufe der Gleichspannung Udc am Zwischenkreiskondensator 140 und der Phasenströme lu, Iv, Iw ausgangsseitig des Wechselrichters in den Phasen der elektrisch erregten Maschine zeigen, wenn der Wechselrichter 110 angesteuert wird von einer Vorrichtung 130 zum Überführen des Wechselrichters 110, des Zwischenkreiskondensators 140 und der elektrischen Maschine 190 in einen sicheren Zustand mittels einer zweiten Schrittfolge. Während eines fünften dargestellten Zeitabschnitts T5 wird die elektrische Maschine in einem zweiten Betriebsmodus B2 betrieben. In diesem Betriebsmodus B2 liegt eine konstante Gleichspannung Udc am Zwischenkreiskondensator 140 an. Durch die Phasen der elektrischen Maschine fließen sinusförmige, 120° versetzte, Phasenströme lu, Iv, Iw. Gemäß der beispielhaften Darstellung wird zur Ermittlung des Abschaltvektors VA der Wechselrichter 140 kurzzeitig in einem sechsten dargestellten Zeitabschnitt T6 in den Freilauf FW geschaltet. Die Gleichspannung Udc am Zwischenkreiskondensator steigt während dessen rasch und stark an. Bevorzugt steigt die Gleichspannung Udc besonders stark an, wenn die elektrische Verbindung zwischen Zwischenkreiskondensator und Batterie getrennt ist oder ein Lastabwurf vorliegt. Bevorzugt sind dies sind typische Fehlerfälle im Vorfeld der Durchführung des Verfahrens zum Betrieb des Wechselrichters. Nach der Bestimmung eines Gegenvektors VG wird der Wechselrichter 110 in einem siebten Zeitabschnitt T7 entsprechend dem Gegenvektor VG angesteuert, wenn die ermittelte Gleichspannung Udc einen vorgebbaren Spannungsschwellwert Us überschreitet. Die Gleichspannung Udc am Zwischenkreiskondensator sinkt während der Ansteuerung mittels dem Gegenvektor VG rasch ab. Die Phasenströme lu, Iv, Iw sind in diesem Zeitabschnitt kleiner als bei einem regulären Betrieb und somit unkritisch. Der Wechselrichter 110 wird in einem achten Zeitabschnitt T8 in den Freilaufbetrieb FW angesteuert, solange die ermittelte Gleichspannung Udc den vorgebbaren Spannungsschwellwert Us unterschreitet. In der Figur 3 sind die Zeitabschnitte sieben T7 und acht T8, bei denen das Ansteuern des Wechselrichters entsprechend dem Gegenvektor und das Ansteuern des Wechselrichters in den Freilaufbetrieb erfolgt, nur einmalig eingezeichnet. Diese beiden Schritte 437 und 438 erfolgen jedoch in Abhängigkeit der ermittelten Gleichspannung Udc und können daher abwechselnd mehrfach auftreten bis die Gleichspannung Udc dauerhaft den vorgebbaren Spannungsschwellwert Us unterschreitet. Folglich wird der Wechselrichter 110, der Zwischenkreiskondensator 140 und die elektrische Maschine 190 mittels der zweiten Schrittfolge in einen sicheren Zustand überführt.

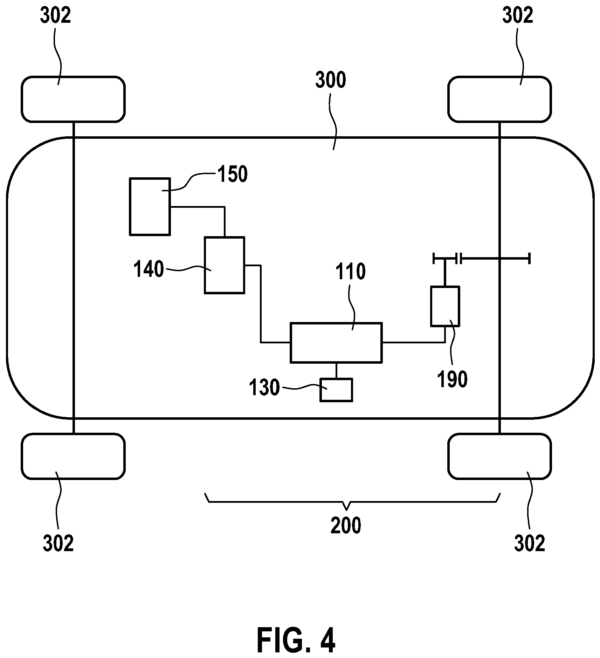

Figur 4 zeigt ein schematisch dargestelltes Fahrzeug 300 mit einem Antriebsstrang 200. Die Darstellung zeigt beispielhaft ein Fahrzeug mit vier Rädern 302, wobei die Erfindung gleichermaßen in beliebigen Fahrzeugen mit einer beliebigen Anzahl an Rädern zu Lande, zu Wasser und in der Luft einsetzbar ist. Der elektrische Antriebsstrang umfasst die Vorrichtung 130 zum Betrieb des Wechselrichters 110. Bevorzugt umfasst der Antriebsstrang 200 einen Zwischenkreiskondensator 140, den Wechselrichter 110, eine elektrisch erregte Maschine 190 und/ oder eine Batterie 150 zur Versorgung des elektrischen Antriebsstrangs mit elektrischer Energie.

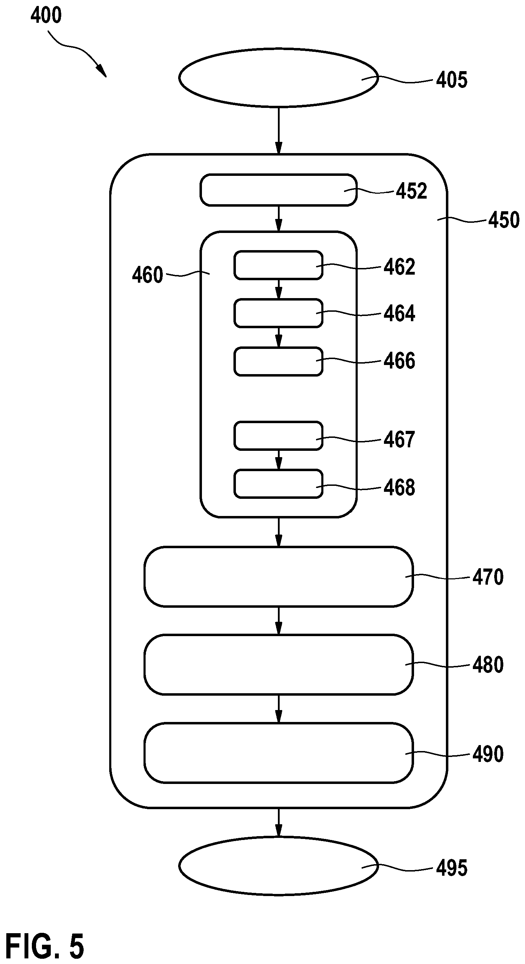

Die Figur 5 zeigt ein schematisch dargestelltes erstes Ablaufdiagramm für ein Verfahren zum Betrieb eines Wechselrichters. Der Wechselrichter 110 ist dabei eingangsseitig mit einem Zwischenkreiskondensator 140 verbunden und ausgangsseitig mit einer elektrisch erregten dreiphasigen Maschine 190. Die elektrische Maschine 190 wird in einem ersten Betriebsmodus B1, insbesondere generatorisch, oder in einem zweiten Betriebsmodus B2, insbesondere motorisch, betrieben. Das Verfahren 400 beginnt mit Schritt 405. In Schritt 450 wird der Wechselrichters 110 zum Überführen des Wechselrichters 110, des Zwischenkreiskondensators 140 und der elektrischen Maschine 190 in einen sicheren Zustand angesteuert, bevorzugt in einen Freilaufbetrieb FW angesteuert. Das Ansteuern des Wechselrichters zum Überführen wird mittels einer ersten Schrittfolge durchgeführt. Dabei wird in Schritt 460 ein Abschaltvektor ermittelt, in Schritt 470 der Wechselrichter 110 entsprechend dem Abschaltvektor VA angesteuert, in Schritt 480 werden die drei Phasenströme lu, Iv, Iw der elektrischen Maschine 190 ermittelt. In Schritt 490 wird der Wechselrichter 110 in den Freilaufbetrieb FW angesteuert, wenn die ermittelten drei Phasenströme lu, Iv, Iw einen vorgebbaren Stromschwellwert Is unterschreiten. Mit Schritt 495 endet das Verfahren. Bevorzugt umfasst der Schritt 460, das Ermitteln des Abschaltvektors, weitere drei Schritte: Das Schalten des Wechselrichters 110 in den Freilaufbetrieb in Schritt 462, das Ermitteln eines Spannungsvektors im Freilaufbetrieb FW in Schritt 464 und das Ermitteln des Abschaltvektors VA in Abhängigkeit des Spannungsvektors in Schritt 466. Bevorzugt umfasst der Schritt 460, das Ermitteln des Abschaltvektors, alternativ weitere zwei Schritte: Das regelmäßige Aktualisieren 467 des Abschaltvektors in einem Speicher und das Auslesen 468 des Abschaltvektors aus dem Speicher in Schritt 468. Bevorzugt umfasst die erste Schrittfolge den Schritt 452, in dem die Erregerspannung der elektrischen Maschine 190 minimiert wird.

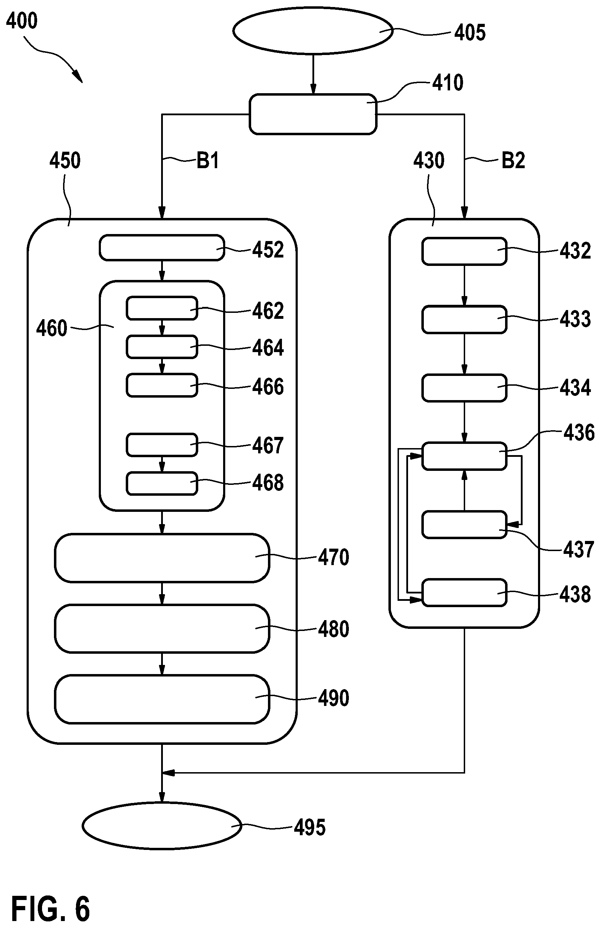

Die Figur 6 zeigt ein schematisch dargestelltes zweites Ablaufdiagramm für ein Verfahren zum Betrieb eines Wechselrichters. Das dargestellte Verfahren umfasst das bereits in Figur 5 erläuterte Verfahren. Zusätzlich umfasst das Verfahren 400 zu Beginn den Schritt 410 zur Ermittlung eines Betriebsmodus B1, B2 der elektrischen Maschine. Anschließend folgt das Ansteuern des Wechselrichters 110 zum Überführen in Abhängigkeit des ermittelten Betriebsmodus mittels der ersten Schrittfolge in Schritt 450 bei Vorliegen des ersten Betriebsmodus B1 und mittels einer zweiten Schrittfolge in Schritt 430 bei Vorliegen des zweiten Betriebsmodus B2. Die erste Schrittfolge erfolgt gemäß dem zu Figur 6 beschriebenen Verfahren. In Schritt 430 wird der Wechselrichters 110 zum Überführen des Wechselrichters 110, des Zwischenkreiskondensators 140 und der elektrischen Maschine 190 in einen sicheren Zustand angesteuert, bevorzugt in einen Freilaufbetrieb FW angesteuert. Das Ansteuern des Wechselrichters zum Überführen wird mittels einer zweiten Schrittfolge durchgeführt. Die zweite Schrittfolge umfasst das Ansteuern des Wechselrichters 110 in den Freilaufbetrieb FW in Schritt 432, das Ermitteln eines Spannungsvektors im Freilaufbetrieb FW in Schritt 433, das Ermitteln eines Gegenvektors in Abhängigkeit des Spannungsvektors in Schritt 434, das Ermitteln einer eingangsseitigen Gleichspannung Udc des Wechselrichters 110 in Schritt 436, das Ansteuern des Wechselrichters 110 entsprechend dem Gegenvektor, wenn die ermittelte Gleichspannung Udc einen vorgebbaren Spannungsschwellwert Us überschreitet in Schritt 437 und das Ansteuern 438 des Wechselrichters 110 in den Freilaufbetrieb FW, solange die ermittelte Gleichspannung Udc den vorgebbaren Spannungsschwellwert Us unterschreitet in Schritt 438.

## Patentansprüche

1. Verfahren (400) zum Betrieb eines Wechselrichters (110),
wobei der Wechselrichter (110) eingangsseitig mit einem Zwischenkreiskondensator (140) verbunden ist und ausgangsseitig mit einer elektrisch erregten dreiphasigen Maschine (190) verbunden ist,
wobei die elektrische Maschine (190) in einem ersten Betriebsmodus (B1), insbesondere generatorisch, oder in einem zweiten Betriebsmodus (B2), insbesondere motorisch, betrieben wird,
wobei der Wechselrichter (110) eine erste, zweite und dritte dem Zwischenkreiskondensator (140) parallel geschaltete Halbbrücke (112, 114, 116) umfasst, wobei jede Halbbrücke (112, 114, 116) zwei in Reihe geschaltete Schaltelemente (112P, 112N, 114P, 114N, 116P, 116N) umfasst und jeweils ein Mittenabgriff zwischen den zwei in Reihe geschalteten Schaltelementen (112P, 112N, 114P, 114N, 116P, 116N) mit je einem Phasenanschluss der elektrischen Maschine (190) verbunden ist,
mit den Schritten:
- Ansteuern (450) des Wechselrichters (110) zum Überführen des Wechselrichters (110), des Zwischenkreiskondensators (140) und der elektrischen Maschine (190) in einen Freilaufbetrieb (FW) als sicheren Zustand,
wobei das Ansteuern (450) des Wechselrichters (110) zum Überführen mittels einer ersten Schrittfolge durchgeführt wird,
wobei die erste Schrittfolge die Schritte umfasst:
- Ermitteln (460) eines Abschaltvektors;
- Ansteuern (470) des Wechselrichters (110) entsprechend dem Abschaltvektor,
- Ermitteln (480) der drei Phasenströme (lu, Iv, Iw) der elektrischen Maschine (190)
- Ansteuern (490) des Wechselrichters (110) in den Freilaufbetrieb (FW), wenn die ermittelten drei Phasenströme (lu, Iv, Iw) einen vorgebbaren Stromschwellwert (Is) unterschreiten,
**dadurch gekennzeichnet, dass**
das Ermitteln (460) des Abschaltvektors die Schritte umfasst:
- Ansteuern (462) des Wechselrichters (110) in den Freilaufbetrieb (FW)
- Ermitteln (464) eines Spannungsvektors im Freilaufbetrieb (FW)
- Ermitteln (466) des Abschaltvektors in Abhängigkeit des Spannungsvektors,
wobei der ermittelte Abschaltvektor ein Schließen eines ersten Schaltelementes (112P, 112N) der ersten Halbbrücke (112) und ein Öffnen eines zweiten Schaltelementes (112P,112N) der ersten Halbbrücke (112) und ein Öffnen der zwei Schaltelemente (114P, 114N, 116P, 116N) der zweiten und der dritten Halbbrücke (114, 116) beschreibt oder
der ermittelte Abschaltvektor ein Schließen eines ersten Schaltelementes (112P, 112N) der ersten Halbbrücke (112) und ein Öffnen eines zweiten Schaltelementes (112P, 112N) der ersten Halbbrücke (112) und ein Schließen eines ersten Schaltelementes (114P, 114N) der zweiten Halbbrücke (114) und ein Öffnen eines zweiten Schaltelementes (114P, 114N) der zweiten Halbbrücke (114) und das Öffnen der zwei Schaltelemente (116P, 116N) der dritten Halbbrücke (116) beschreibt.

2. Verfahren nach Anspruch 1,
wobei das Ermitteln (460) des Abschaltvektors die Schritte umfasst:
- Regelmäßiges Aktualisieren (467) des Abschaltvektors in einem Speicher in Abhängigkeit des Betriebs des Wechselrichters (110)
- Auslesen (468) des Abschaltvektors aus dem Speicher

3. Verfahren nach einem der vorherigen Ansprüche,
wobei das Ansteuern (450) des Wechselrichters (110) zum Überführen mittels einer ersten Schrittfolge den Schritt umfasst:
- Minimieren (452) des Erregerstroms der elektrischen Maschine (190).

4. Verfahren (100) nach einem der vorhergehenden Ansprüche,
wobei das Verfahren (100) mit den Schritten beginnt:,
- Ermitteln (410) des Betriebsmodus (B1, B2) der elektrischen Maschine (190),
- Ansteuern des Wechselrichters (110) zum Überführen in Abhängigkeit des ermittelten Betriebsmodus mittels der ersten Schrittfolge (450) bei Vorliegen des ersten Betriebsmodus (B1) und mittels einer zweiten Schrittfolge (430) bei Vorliegen des zweiten Betriebsmodus (B2).

5. Verfahren nach Anspruch 4,
wobei die zweite Schrittfolge die Schritte umfasst:
- Ansteuern (432) des Wechselrichters (110) in den Freilaufbetrieb (FW)
- Ermitteln (433) eines Spannungsvektors im Freilaufbetrieb (FW)
- Ermitteln (434) eines Gegenvektors in Abhängigkeit des Spannungsvektors
- Ermitteln (436) einer eingangsseitigen Gleichspannung (Udc) des Wechselrichters (110),
- Ansteuern (437) des Wechselrichters (110) entsprechend dem Gegenvektor, wenn die ermittelte Gleichspannung (Udc) einen vorgebbaren Spannungsschwellwert überschreitet,
- Ansteuern (438) des Wechselrichters (110) in den Freilaufbetrieb (FW), solange die ermittelte Gleichspannung (Udc) den Spannungsschwellwert unterschreitet.

6. Vorrichtung (130) zum Betrieb eines Wechselrichters (110),
wobei der Wechselrichter (110) dazu eingerichtet ist, eingangsseitig mit einem Zwischenkreiskondensator (140) verbunden und ausgangsseitig mit einer elektrisch erregten dreiphasigen Maschine (190) verbunden zu werden,
wobei die elektrische Maschine (190) dazu eingerichtet ist, in einem ersten Betriebsmodus (B1), insbesondere generatorisch, oder in einem zweiten Betriebsmodus (B2), insbesondere motorisch, betrieben zu werden, wobei die Vorrichtung (130) dazu eingerichtet ist,
den Wechselrichter (110) anzusteuern zum Überführen des Wechselrichters (110), des Zwischenkreiskondensators (140) und der elektrischen Maschine (190) in einen Freilaufbetrieb (FW) als sicheren Zustand,
wobei der Wechselrichter (110) eine erste, zweite und dritte dem Zwischenkreiskondensator (140) parallel geschaltete Halbbrücke (112, 114, 116) umfasst, wobei jede Halbbrücke (112, 114, 116) zwei in Reihe geschaltete Schaltelemente (112P, 112N, 114P, 114N, 116P, 116N) umfasst und jeweils ein Mittenabgriff zwischen den zwei in Reihe geschalteten Schaltelementen (112P, 112N, 114P, 114N, 116P, 116N) mit je einem Phasenanschluss der elektrischen Maschine (190) verbunden ist,
wobei
die Vorrichtung (130) dazu eingerichtet ist, das Ansteuern (450) des Wechselrichters zum Überführen mittels einer ersten Schrittfolge durchzuführen,
wobei die erste Schrittfolge umfasst:
- einen Abschaltvektor zu ermitteln (460)
- den Wechselrichter (110) entsprechend dem Abschaltvektor anzusteuern (470),
- drei Phasenströme (lu, Iv, Iw) der elektrischen Maschine (190) zu ermitteln
- den Wechselrichter (110) in den Freilaufbetrieb (FW) anzusteuern, wenn die ermittelten drei Phasenströme (lu, Iv, Iw) einen vorgebbaren Stromschwellwert (Is) unterschreiten
**dadurch gekennzeichnet, dass**
das Ermitteln (460) des Abschaltvektors die Schritte umfasst:
- Ansteuern (462) des Wechselrichters (110) in den Freilaufbetrieb (FW)
- Ermitteln (464) eines Spannungsvektors im Freilaufbetrieb (FW)
- Ermitteln (466) des Abschaltvektors in Abhängigkeit des Spannungsvektors
wobei der ermittelte Abschaltvektor ein Schließen eines ersten Schaltelementes (112P, 112N) der ersten Halbbrücke (112) und ein Öffnen eines zweiten Schaltelementes (112P,112N) der ersten Halbbrücke (112) und ein Öffnen der zwei Schaltelemente (114P, 114N, 116P, 116N) der zweiten und der dritten Halbbrücke (114, 116) beschreibt oder
der ermittelte Abschaltvektor ein Schließen eines ersten Schaltelementes (112P, 112N) der ersten Halbbrücke (112) und ein Öffnen eines zweiten Schaltelementes (112P, 112N) der ersten Halbbrücke (112) und ein Schließen eines ersten Schaltelementes (114P, 114N) der zweiten Halbbrücke (114) und ein Öffnen eines zweiten Schaltelementes (114P, 114N) der zweiten Halbbrücke (114) und das Öffnen der zwei Schaltelemente (116P, 116N) der dritten Halbbrücke (116) beschreibt.

7. Antriebsstrang (200) mit einer Vorrichtung (130) gemäß Anspruch 6.

8. Fahrzeug (300) mit einem Antriebsstrang (200) nach Anspruch 7

9. Computerprogramm, umfassend Befehle, die bewirken, dass die Vorrichtung nach Anspruch 6 die Verfahrensschritte nach einem der Ansprüche 1 bis 5 ausführt.

10. Computerlesbares Speichermedium, umfassend Befehle, die bei der Ausführung durch einen Computer die Vorrichtung nach Anspruch 6 veranlassen, die Verfahrensschritte des Verfahrens (100) nach einem der Ansprüche 1 bis 5 auszuführen.

## Claims

1. Method (400) for operating an inverter (110),
wherein the inverter (110) is connected on the input side to a DC link capacitor (140) and is connected on the output side to an electrically excited three-phase machine (190),
wherein the electric machine (190) is operated in a first operating mode (B1), in particular as a generator, or in a second operating mode (B2), in particular as a motor,
wherein the inverter (110) comprises a first, second and third half-bridge (112, 114, 116) connected in parallel with the DC link capacitor (140), wherein each half-bridge (112, 114, 116) comprises two switching elements (112P, 112N, 114P, 114N, 116P, 116N) connected in series and a centre tap between the two switching elements (112P, 112N, 114P, 114N, 116P, 116N) connected in series is connected to in each case one phase connection of the electric machine (190),
comprising the steps of:
- driving (450) the inverter (110) in order to transfer the inverter (110), the DC link capacitor (140) and the electric machine (190) into a free-wheeling mode (FW) as a safe state,
wherein driving (450) the inverter (110) for transfer is carried out by means of a first step sequence,
wherein the first step sequence comprises the steps of:
- determining (460) a switch-off vector;
- driving (470) the inverter (110) in accordance with the switch-off vector,
- determining (480) the three phase currents (lu, lv, Iw) of the electric machine (190),
- driving (490) the inverter (110) into the free-wheeling mode (FW) if the determined three phase currents (lu, lv, Iw) fall below a predefinable current threshold value (Is),
**characterized in that**
determining (460) the switch-off vector comprises the steps of:
- driving (462) the inverter (110) into the free-wheeling mode (FW),
- determining (464) a voltage vector in the free-wheeling mode (FW),
- determining (466) the switch-off vector depending on the voltage vector,
wherein the determined switch-off vector describes closing a first switching element (112P, 112N) of the first half-bridge (112) and opening a second switching element (112P, 112N) of the first half-bridge (112) and opening the two switching elements (114P, 114N, 116P, 116N) of the second and the third half-bridge (114, 116), or
the determined switch-off vector describes closing a first switching element (112P, 112N) of the first half-bridge (112) and opening a second switching element (112P, 112N) of the first half-bridge (112) and closing a first switching element (114P, 114N) of the second half-bridge (114) and opening a second switching element (114P, 114N) of the second half-bridge (114) and opening the two switching elements (116P, 116N) of the third half-bridge (116).

2. Method according to Claim 1,
wherein determining (460) the switch-off vector comprises the steps of:
- regularly updating (467) the switch-off vector in a memory depending on the operation of the inverter (110),
- reading (468) the switch-off vector from the memory.

3. Method according to either of the preceding claims,
wherein driving (450) the inverter (110) for transfer by means of a first step sequence comprises the step of:
- minimizing (452) the excitation current of the electric machine (190).

4. Method (100) according to one of the preceding claims,
wherein the method (100) begins with the steps of:
- determining (410) the operating mode (B1, B2) of the electric machine (190),
- driving the inverter (110) for transfer depending on the determined operating mode by means of the first step sequence (450) if the first operating mode (B1) is present and by means of a second step sequence (430) if the second operating mode (B2) is present.

5. Method according to Claim 4,
wherein the second step sequence comprises the steps of:
- driving (432) the inverter (110) into the free-wheeling mode (FW),
- determining (433) a voltage vector in the free-wheeling mode (FW),
- determining (434) a counter-vector depending on the voltage vector,
- determining (436) an input-side DC voltage (Udc) of the inverter (110),
- driving (437) the inverter (110) in accordance with the counter-vector if the determined DC voltage (Udc) exceeds a predefinable voltage threshold value,
- driving (438) the inverter (110) into the free-wheeling mode (FW) as long as the determined DC voltage (Udc) falls below the voltage threshold value.

6. Device (130) for operating an inverter (110),
wherein the inverter (110) is configured to be connected on the input side to a DC link capacitor (140) and on the output side to an electrically excited three-phase machine (190),
wherein the electric machine (190) is configured to be operated in a first operating mode (B1), in particular as a generator, or in a second operating mode (B2), in particular as a motor,
wherein the device (130) is configured
to drive the inverter (110) in order to transfer the inverter (110), the DC link capacitor (140) and the electric machine (190) into a free-wheeling mode (FW) as a safe state,
wherein the inverter (110) comprises a first, second and third half-bridge (112, 114, 116) connected in parallel with the DC link capacitor (140), wherein each half-bridge (112, 114, 116) comprises two switching elements (112P, 112N, 114P, 114N, 116P, 116N) connected in series and a centre tap between the two switching elements (112P, 112N, 114P, 114N, 116P, 116N) connected in series is connected to in each case one phase connection of the electric machine (190),
wherein
the device (130) is configured to carry out driving (450) of the inverter for transfer by means of a first step sequence,
wherein the first step sequence comprises:
- determining a switch-off vector (460),
- driving (470) the inverter (110) in accordance with the switch-off vector,
- determining three phase currents (lu, lv, Iw) of the electric machine (190),
- driving the inverter (110) into the free-wheeling mode (FW) if the determined three phase currents (lu, lv, Iw) fall below a predefinable current threshold value (Is),
**characterized in that**
determining (460) the switch-off vector comprises the steps of:
- driving (462) the inverter (110) into the free-wheeling mode (FW),
- determining (464) a voltage vector in the free-wheeling mode (FW),
- determining (466) the switch-off vector depending on the voltage vector,
wherein the determined switch-off vector describes closing a first switching element (112P, 112N) of the first half-bridge (112) and opening a second switching element (112P, 112N) of the first half-bridge (112) and opening the two switching elements (114P, 114N, 116P, 116N) of the second and the third half-bridge (114, 116), or
the determined switch-off vector describes closing a first switching element (112P, 112N) of the first half-bridge (112) and opening a second switching element (112P, 112N) of the first half-bridge (112) and closing a first switching element (114P, 114N) of the second half-bridge (114) and opening a second switching element (114P, 114N) of the second half-bridge (114) and opening the two switching elements (116P, 116N) of the third half-bridge (116).

7. Drive train (200) having a device (130) according to Claim 6.

8. Vehicle (300) having a drive train (200) according to Claim 7.

9. Computer program comprising commands which cause the device according to Claim 6 to perform the method steps according to one of Claims 1 to 5.

10. Computer-readable storage medium, comprising commands which, when executed by a computer, cause the device according to Claim 6 to carry out the method steps of the method (100) according to one of Claims 1 to 5.

## Revendications

1. Procédé (400) destiné au fonctionnement d'un onduleur (110),
l'onduleur (110) étant relié côté entrée à un condensateur de circuit intermédiaire (140) et côté sortie à une machine triphasée (190) excitée électriquement,
la machine électrique (190) fonctionnant dans un premier mode de fonctionnement (B1), notamment en mode génératrice, ou dans un deuxième mode de fonctionnement (B2), notamment en mode moteur,
l'onduleur (110) comprenant un premier, un deuxième et un troisième demi-pont (112, 114, 116) montés en parallèle au condensateur de circuit intermédiaire (140), chaque demi-pont (112, 114, 116) comprenant deux éléments de commutation montés en série (112P, 112N, 114P, 114N, 116P, 116N) et une prise médiane respective entre les deux éléments de commutation montés en série (112P, 112N, 114P, 114N, 116P, 116N) étant reliée à une borne de phase respective de la machine électrique (190),
comprenant les étapes consistant à :
- commander (450) l'onduleur (110) pour faire passer l'onduleur (110), le condensateur de circuit intermédiaire (140) et la machine électrique (190) en mode roue libre (FW) en tant qu'état de sûreté,
la commande (450) de l'onduleur (110) pour la transition étant effectuée au moyen d'une première séquence d'étapes,
la première séquence d'étapes comprenant les étapes consistant à :
- déterminer (460) un vecteur de coupure ;
- commander (470) l'onduleur (110) conformément au vecteur de coupure,
- déterminer (480) les trois courants de phase (lu, Iv, Iw) de la machine électrique (190)
- commander (490) l'onduleur (110) en mode roue libre (FW) lorsque les trois courants de phase (lu, Iv, Iw) déterminés passent en dessous d'une valeur seuil de courant (Is) prédéfinie,
**caractérisé en ce que**
la détermination (460) du vecteur de coupure comprend les étapes consistant à :
- commander (462) l'onduleur (110) en mode roue libre (Fw)
- déterminer (464) un vecteur de tension en mode roue libre (FW)
- déterminer (466) le vecteur de coupure en fonction du vecteur tension,
le vecteur de coupure déterminé décrivant une fermeture d'un premier élément de commutation (112P, 112N) du premier demi-pont (112) et une ouverture d'un deuxième élément de commutation (112P, 112N) du premier demi-pont (112) et une ouverture des deux éléments de commutation (114P, 114N, 116P, 116N) du deuxième et du troisième demi-pont (114, 116), ou
le vecteur de coupure déterminé décrivant une fermeture d'un premier élément de commutation (112P, 112N) du premier demi-pont (112) et une ouverture d'un deuxième élément de commutation (112P, 112N) du premier demi-pont (112) et une fermeture d'un premier élément de commutation (114P, 114N) du deuxième demi-pont (114) et une ouverture d'un deuxième élément de commutation (114P, 114N) du deuxième demi-pont (114) et l'ouverture des deux éléments de commutation (116P, 116N) du troisième demi-pont (116).

2. Procédé selon la revendication 1,
dans lequel la détermination (460) du vecteur de coupure comprend les étapes consistant à :
- mettre à jour régulièrement (467) le vecteur de coupure dans une mémoire en fonction du fonctionnement de l'onduleur (110)
- lire (468) le vecteur de coupure depuis la mémoire.

3. Procédé selon l'une des revendications précédentes,
dans lequel la commande (450) de l'onduleur (110) pour la transition au moyen d'une première séquence d'étapes comprend l'étape consistant à :
- minimiser (452) le courant d'excitation de la machine électrique (190).

4. Procédé (100) selon l'une des revendications précédentes,
le procédé (100) débutant par les étapes consistant à :
- déterminer (410) le mode de fonctionnement (B1, B2) de la machine électrique (190),
- commander l'onduleur (110) pour la transition en fonction du mode de fonctionnement déterminé, au moyen de la première séquence d'étapes (450) en présence du premier mode de fonctionnement (B1) et au moyen d'une deuxième séquence d'étapes (430) en présence du deuxième mode de fonctionnement (B2).

5. Procédé selon la revendication 4,
dans lequel la deuxième séquence d'étapes comprend les étapes consistant à :
- commander (432) l'onduleur (110) en mode roue libre (Fw)
- déterminer (433) un vecteur de tension en mode roue libre (FW)
- déterminer (434) un contre-vecteur en fonction du vecteur tension
- déterminer (436) une tension continue côté entrée (Udc) de l'onduleur (110),
- commander (437) l'onduleur (110) conformément au contre-vecteur lorsque la tension continue (Udc) déterminée dépasse une valeur seuil de tension prédéfinie,
- commander (438) l'onduleur (110) en mode roue libre (FW) tant que la tension continue (UDC) déterminée reste inférieure à la valeur seuil de tension.

6. Dispositif (130) destiné au fonctionnement d'un onduleur (110),
l'onduleur (110) étant conçu pour être relié côté entrée à un condensateur de circuit intermédiaire (140) et côté sortie à une machine triphasée (190) excitée électriquement,
la machine électrique (190) étant conçue pour fonctionner dans un premier mode de fonctionnement (B1), notamment en mode génératrice, ou dans un deuxième mode de fonctionnement (B2), notamment en mode moteur,
le dispositif (130) étant conçu pour
commander l'onduleur (110) pour faire passer l'onduleur (110), le condensateur de liaison continue (140) et la machine électrique (190) en mode de roue libre (FW) en tant qu'état de sûreté,
l'onduleur (110) comprenant un premier, un deuxième et un troisième demi-pont (112, 114, 116) montés en parallèle au condensateur de circuit intermédiaire (140), chaque demi-pont (112, 114, 116) comprenant deux éléments de commutation montés en série (112P, 112N, 114P, 114N, 116P, 116N) et une prise médiane respective entre les deux éléments de commutation montés en série (112P, 112N, 114P, 114N, 116P, 116N) étant reliée à une borne de phase respective de la machine électrique (190),
dans lequel
le dispositif (130) est conçu pour effectuer la commande (450) de l'onduleur pour la transition au moyen d'une première séquence d'étapes,
la première séquences d'étapes consistant à :
- déterminer un vecteur de coupure (460)
- commander l'onduleur (110) conformément au vecteur de coupure (470),
- déterminer trois courants de phase (lu, Iv, Iw) de la machine électrique (190).
- commander l'onduleur (110) en mode roue libre (FW) lorsque les trois courants de phase (lu, Iv, Iw) déterminés passent en dessous d'une valeur seuil de courant (Is) prédéfinie,
**caractérisé en ce que**
la détermination (460) du vecteur de coupure comprend les étapes consistant à :
- commander (462) l'onduleur (110) en mode roue libre (Fw)
- déterminer (464) un vecteur de tension en mode roue libre (FW)
- déterminer (466) le vecteur de coupure en fonction du vecteur de tension
le vecteur de coupure déterminé décrivant une fermeture d'un premier élément de commutation (112P, 112N) du premier demi-pont (112) et une ouverture d'un deuxième élément de commutation (112P, 112N) du premier demi-pont (112) et une ouverture des deux éléments de commutation (114P, 114N, 116P, 116N) du deuxième et du troisième demi-pont (114, 116), ou
le vecteur de coupure déterminé décrivant une fermeture d'un premier élément de commutation (112P, 112N) du premier demi-pont (112) et une ouverture d'un deuxième élément de commutation (112P, 112N) du premier demi-pont (112) et une fermeture d'un premier élément de commutation (114P, 114N) du deuxième demi-pont (114) et une ouverture d'un deuxième élément de commutation (114P, 114N) du deuxième demi-pont (114) et l'ouverture des deux éléments de commutation (116P, 116N) du troisième demi-pont (116).

7. Chaîne cinématique (200) comprenant un dispositif (130) selon la revendication 6.

8. Véhicule (300), comprenant une chaîne cinématique (200) selon la revendication 7.

9. Programme informatique, comprenant des instructions qui ont pour effet que le dispositif selon la revendication 6 exécute les étapes du procédé selon l'une des revendications 1 à 5.

10. Support de stockage lisible par ordinateur, comprenant des instructions qui, lors de leur exécution par un ordinateur, amènent le dispositif selon la revendication 6 à exécuter les étapes du procédé (100) selon l'une des revendications 1 à 5.
